# EUROPÄISCHE PATENTSCHRIFT

(11) **EP 1 741 331 B1**
(45) Veröffentlichungstag und Bekanntmachung des Hinweises auf die Patenterteilung: **03.03.2010**
(21) Anmeldenummer: 06115440.7
(22) Anmeldetag: 14.06.2006
(51) Int. Cl.: A01F 29/14, A01D 43/08

(54) **Feldhäcksler und Verfahren zum Betrieb**
Forage harvester and method of operating
Faucheuse-hacheuse et procédé de fonctionnement

(30) Priorität: 06.07.2005 DE 102005031549
(43) Veröffentlichungstag der Anmeldung: 10.01.2007
(73) Patentinhaber: Deere & Company, Moline, IL 61265-8098 (US)
(72) Erfinder: Vogelgesang, Claus-Joseph, 66399, Mandelbachtal (DE)
(74) Vertreter: Holst, Sönke

(56) Entgegenhaltungen:
- EP-A2- 1 402 769
- DE-A1- 10 207 467
- DE-A1- 10 220 699

## Beschreibung

Die Erfindung betrifft ein Verfahren zum Betrieb eines Feldhäckslers nach dem Oberbegriff des Anspruchs 1.

### Stand der Technik

Feldhäcksler werden in der Landwirtschaft verwendet, um Erntegut mittels einer Erntegutaufnahmevorrichtung von einem Feld abzuschneiden oder aufzusammeln, über eine Zuführeinrichtung einer Häckseleinrichtung zuzuführen, in der Regel eine Häckseltrommel oder ein Scheibenradhäcksler, um es zu häckseln und es, in der Regel nach einer Beschleunigung mittels eines Gebläses, durch einen in seiner Position verstellbaren Auswurfkrümmer auf ein Transportfahrzeug auszutragen. Die geernteten Pflanzen werden in den meisten Fällen als Silage zum Verfüttern an Tiere verwendet.

Der Antrieb der Erntegutaufnahmevorrichtung, der Zuführeinrichtung sowie der Häckseleinrichtung erfolgt durch einen Verbrennungsmotor. Die Schnittlänge wird durch die in der Regel veränderbare Geschwindigkeit der Zuführeinrichtung und die von der Drehzahl des Verbrennungsmotors abhängige Drehzahl der Häckseleinrichtung definiert. Im Stand der Technik finden zur Wahl der Schnittlänge in Stufen umschaltbare mechanische Getriebe, Hydraulikantriebe (DE 196 32 977 A) oder Planetengetriebe, die hydraulisch und mechanisch angetriebene Elemente umfassen (DE 198 12 500 A) Verwendung. Die Geschwindigkeit der Zuführeinrichtung kann demnach durch Bedienereingabe oder basierend auf Sensorwerten (DE 102 20 699 A, DE 102 41 788 A) verändert werden. Der Antrieb der Erntegutaufnahmevorrichtung erfolgt über eine fernbedienbare Kupplung (S. DE 102 07 467 A), die es einem Bediener ermöglicht, die Erntegutaufnahmevorrichtung vor Beginn des Häckselbetriebs in Bewegung zu setzen.

Beim Einschalten der Kupplung der Erntegutaufnahmevorrichtung entstehen oft so genannte Überlängen, d. h. geschnittenes Material mit einer Schnittlänge, die größer als die gewünschte bzw. eingestellte Schnittlänge ist. Diese Überlängen sind u. a. dadurch bedingt, dass das in der Zuführeinrichtung noch vorhandene Erntegut anfangs nicht richtig von der Häckseleinrichtung erfasst wird und daher als Ganzes oder zumindest nicht im gewünschten Maß zerkleinert ausgeworfen wird. Außerdem werden die Kupplungen für die Zuführeinrichtung und die Erntegutaufnahmeeinrichtung relativ stark belastet, wenn diese eingeschaltet und plötzlich auf ihre Sollgeschwindigkeit gebracht werden.

Im Stand der Technik wurden verschiedene Automatismen für das Einschalten eines Erntevorsatzes (DE 297 02 902 U) oder das Abschalten des Antriebs eines Feldhäckslers (EP 0 986 946 A) sowie Einrichtungen zur Drehzahlvorgabe eines Verbrennungsmotors eines Feldhäckslers beschrieben (DE 101 10 232 A), die das beschriebene Problem jedoch nicht lösen können.

### Aufgabe der Erfindung

Die der Erfindung zu Grunde liegende Aufgabe wird darin gesehen, ein Verfahren zum Betrieb eines Feldhäckslers bereitzustellen, bei dem Überlängen bei der Aufnahme des Häckselbetriebs vermindert werden.

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Der Feldhäcksler umfasst in an sich bekannter Weise einen Verbrennungsmotor, der über einen Antriebsstrang mit einer Häckseleinrichtung, einer Zuführeinrichtung und einer Erntegutaufnahmeeinrichtung in Antriebsverbindung steht. Eine Steuerung kontrolliert die Geschwindigkeit der Zuführeinrichtung und eine zwischen den Verbrennungsmotor und die Erntegutaufnahmeeinrichtung eingefügte Kupplung. Wenn ein Bediener mittels der Bedienereingabeeinrichtung eine Aufnahme des Häckselbetriebs veranlasst, führt die Steuerung automatisch eine Reihe an Schritten durch:
Zunächst wird die Antriebsgeschwindigkeit der Zuführeinrichtung auf einen unterhalb ihres Sollwerts für den Erntebetrieb liegenden, von Null verschiedenen Wert gebracht, der vorzugsweise zumindest näherungsweise einem Minimalwert entspricht. Dann wird die Kupplung geschlossen, d. h. die Erntegutaufnahmevorrichtung in Betrieb gesetzt. Schließlich wird die Antriebsgeschwindigkeit der Zuführeinrichtung auf den Sollwert der Geschwindigkeit für den Erntebetrieb verbracht, der insbesondere einer Bedienereingabe oder einem selbsttätig bestimmten Wert entspricht.

Auf diese Weise erreicht man, dass die Zuführeinrichtung vor und auch für eine definierte Zeitspanne nach dem Einschalten der Kupplung mit einer hinreichend geringen Geschwindigkeit angetrieben wird, dass durch die langsame Zuführung des Ernteguts zur Häckseleinrichtung unerwünschte Überlängen vermieden werden können. Die gewählte, relativ niedrige Geschwindigkeit der Zuführeinrichtung entspricht einer kleinen Schnittlänge des Ernteguts, die eine problemlose Förderung des Ernteguts stromauf und auch stromab der Häckseleinrichtung und am Eingang der Zuführeinrichtung ermöglicht. Nach dem Schließen der Kupplung und dem Ablauf der vorbestimmten, zur Herstellung und Stabilisierung des Gutflusses durch den Feldhäcksler hinreichenden Zeitspanne, die z. B. 3 bis 10 s dauern kann, veranlasst die Steuerung selbsttätig, dass eine vom Bediener eingegebene Geschwindigkeit der Zuführeinrichtung, die einer gewünschten Schnittlänge entspricht, erreicht wird. Alternativ wird eine selbsttätig bestimmte Geschwindigkeit der Zuführeinrichtung ausgewählt, die z. B. anhand der Feuchtigkeit des Ernteguts oder anhand dessen mechanischer Eigenschaften bestimmt wird.

Durch den selbsttätig ablaufenden Algorithmus vermeidet man unerwünschte Überlängen bei der Aufnahme des Häckselbetriebs. Die Kupplungen im Antriebsstrang der Zuführeinrichtung werden geschont. Auch wird das Risiko verringert, dass Fremdkörper zur Häckseleinrichtung gelangen, da diese wegen der geringen Fördergeschwindigkeit unschwer durch einen Metalldetektor der Zuführeinrichtung nachgewiesen werden können.

In einer bevorzugten Ausführungsform der Erfindung wird nach einer den Wunsch zur Aufnahme des Häckselbetriebs signalisierenden Bedienereingabe die Antriebsgeschwindigkeit am Eingang der Kupplung der Erntegutaufnahmeeinrichtung auf eine unter dem Sollwert der Antriebsgeschwindigkeit der Erntegutaufnahmeeinrichtung für den Erntebetrieb liegende Geschwindigkeit verbracht, die insbesondere nahe einem Minimalwert liegt. Die Einstellung dieser Geschwindigkeit am Eingang der Kupplung der Erntegutaufnahmeeinrichtung kann zeitlich vor, nach oder gleichzeitig mit der selbsttätigen Einstellung der unterhalb des Sollwerts liegenden Geschwindigkeit der Zuführeinrichtung liegen. Beim Einschalten der Kupplung wird letztere geschont, da sie aufgrund der geringen Geschwindigkeit nur geringe Lasten zu übertragen hat. Außerdem wird zunächst wegen der geringen Geschwindigkeit der Erntegutaufnahmevorrichtung nur wenig Erntegut in die Zuführeinrichtung gefördert, was eine Entstehung von Gutstaus am Einlass der Zuführeinrichtung vermeidet. Anschließend wird die Antriebsgeschwindigkeit der Erntegutaufnahmeeinrichtung am Eingang der Kupplung wieder auf den Sollwert gebracht, was vorzugsweise erst nach der Einstellung der Geschwindigkeit der Zuführeinrichtung auf ihren Sollwert für den Erntebetrieb erfolgt, um einen Stau am Einlass der Zuführeinrichtung zu vermeiden.

In der Regel ist die Erntegutaufnahmeeinrichtung durch ein mechanisches Getriebe mit dem Verbrennungsmotor verbunden. Das mechanische Getriebe hat eine feste oder in Stufen (z. B. Schaltgetriebe) oder stufenlos (z. B. Riemenvariator) änderbare Übersetzung. Um die Geschwindigkeit am Eingang der Kupplung des Antriebs der Erntegutaufnahmeeinrichtung zu verändern, d. h. vor dem Einschalten der Kupplung zu vermindern und anschließend anzuheben, bietet es sich an, die Steuerung auch zur Vorgabe der Drehzahl des Verbrennungsmotors geeignet auszuführen. Die Steuerung kann demnach vor dem Einschalten der Kupplung die Drehzahl des Verbrennungsmotors herabsetzen, vorzugsweise etwa auf seine Leerlaufdrehzahl, und nach dem Einschalten der Kupplung wieder auf eine für den Erntebetrieb geeignete Drehzahl heraufsetzen, insbesondere auf eine vom Bediener vorgegebene oder selbsttätig bestimmte, z. B. an die abgenommene Leistung angepasste Drehzahl.

Bei einer anderen Ausführungsform wird auf ein Absenken der Drehzahl des Verbrennungsmotors verzichtet, wenn er bereits mit Nenndrehzahl läuft. Läuft er bei dieser Ausführungsform hingegen mit verminderter Drehzahl, z. B. Leerlaufdrehzahl, wird seine Drehzahl nach dem Einschalten der Kupplung selbsttätig auf die für den Erntebetrieb geeignete Drehzahl heraufgesetzt, insbesondere auf eine vom Bediener vorgegebene oder selbsttätig bestimmte, z. B. an die abgenommene Leistung angepasste Drehzahl.

Bei einer anderen Ausführungsform wird die Leistung vom Verbrennungsmotor hydraulisch auf die Erntegutaufnahmevorrichtung übertragen, d. h. mittels eines Hydraulikgetriebes mit einer vom Verbrennungsmotor angetriebenen Hydropumpe und einem die Erntegutaufnahmevorrichtung antreibenden Hydromotor. Bei einer derartigen Ausführungsform kann ebenfalls die Drehzahl des Verbrennungsmotors vor dem Einschalten der Kupplung reduziert (z. B. auf einen Leerlaufwert) und anschließend angehoben werden. Zusätzlich oder alternativ wird das Übersetzungsverhältnis des Hydraulikgetriebes zur Verringerung der Geschwindigkeit am Eingang der Kupplung verändert, d. h. vor dem Einschalten der Kupplung reduziert und danach angehoben.

Der Antrieb der Zuführeinrichtung erfolgt vorzugsweise über ein Getriebe, dessen Übersetzungsverhältnis durch die Steuerung änderbar ist. Ein geeignetes Getriebe umfasst ein Planetengetriebe, das ein vom Verbrennungsmotor angetriebenes Element, ein mit veränderbarer Geschwindigkeit angetriebenes Element, dessen Geschwindigkeit durch die Steuerung veränderbar ist, sowie ein die Zuführeinrichtung antreibendes Element aufweist. Das mit veränderbarer Geschwindigkeit antreibbare Element wird vor dem Einschalten der Kupplung gegenüber seiner beim Erntebetrieb geltenden Sollgeschwindigkeit verlangsamt, vorzugsweise auf seine Mindestdrehzahl, und nach dem Einschalten der Kupplung wieder beschleunigt, um die Geschwindigkeit der Zuführeinrichtung vor dem Einschalten der Kupplung herunter- und nach dem Einschalten der Kupplung wieder heraufzusetzen. Bei einer anderen Ausführungsform wird die Leistung vom Verbrennungsmotor rein hydraulisch auf die Zuführeinrichtung übertragen, d. h. mittels eines Hydraulikgetriebes mit einer vom Verbrennungsmotor angetriebenen Hydropumpe und einem die Zuführeinrichtung antreibenden Hydromotor. Hier entspricht das mit veränderbarer Geschwindigkeit antreibbare Element dem Hydromotor und das Übersetzungsverhältnis des Hydraulikgetriebes wird zur Verminderung der Geschwindigkeit der Zuführeinrichtung verändert, d. h. vor dem Einschalten der Kupplung reduziert und danach angehoben. Die Geschwindigkeit des Verbrennungsmotors kann dann konstant bleiben.

### Ausführungsbeispiel

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: ein Schema des Antriebssystems der Gutförder- und Gutbearbeitungselemente der Erntemaschine,
- Fig. 3: ein Schema des verstellbaren Getriebes des Antriebssystems, und
- Fig. 4: ein Flussdiagramm, nach dem die Steuerung das Antriebssystem des Feldhäckslers bei Beginn eines Erntevorgangs ansteuert.

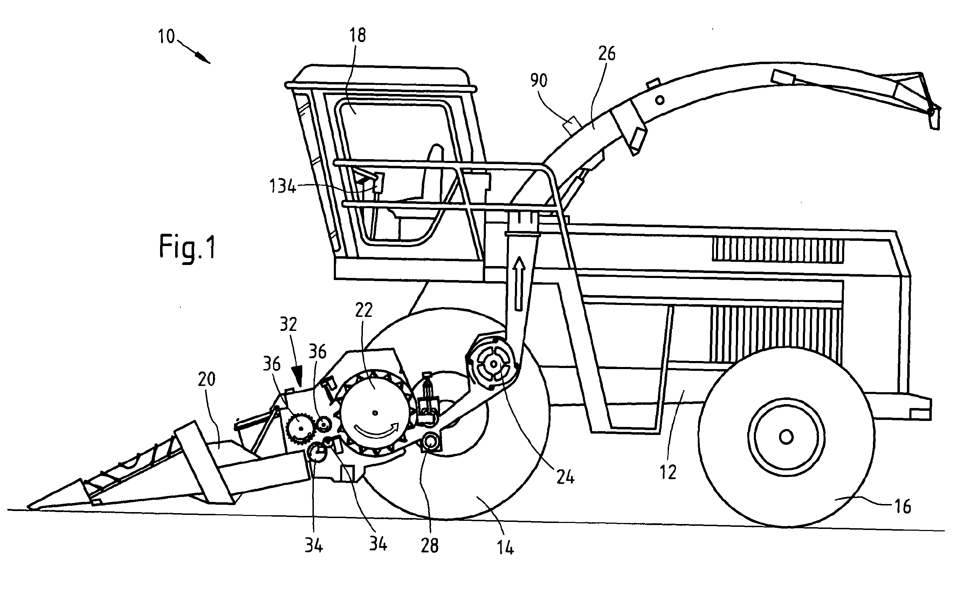

Eine in Figur 1 gezeigte Erntemaschine 10 in Form eines selbst fahrenden Feldhäckslers baut sich auf einem Rahmen 12 auf, der von vorderen und lenkbaren rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird durch eine in einem Einzugskanal des Feldhäckslers 10 angeordnete Zuführeinrichtung 32 mit unteren Einzugswalzen 34 und oberen Einzugswalzen 36 einer Häckseleinrichtung 22 in Form einer Häckseltrommel zugeführt, die es in kleine Stücke häckselt und es einer Fördervorrichtung 24 aufgibt. In der Regel sind die oberen Einzugswalzen 36 relativ zu den unteren Einzugswalzen 34 bewegbar angeordnet und werden durch Federkraft gegen letztere gepresst. Das Gut verlässt den Feldhäcksler 10 zu einem nebenher fahrenden Anhänger oder anderen Transportfahrzeug über einen drehbaren Austragsschacht 26. Zwischen der Häckseleinrichtung 22 und der Fördervorrichtung 24 ist eine aus zwei übereinander angeordneten Prozessorwalzen aufgebaute Nachzerkleinerungsvorrichtung 28 angeordnet, durch die das zu fördernde Gut der Fördervorrichtung 24 tangential zugeführt wird.

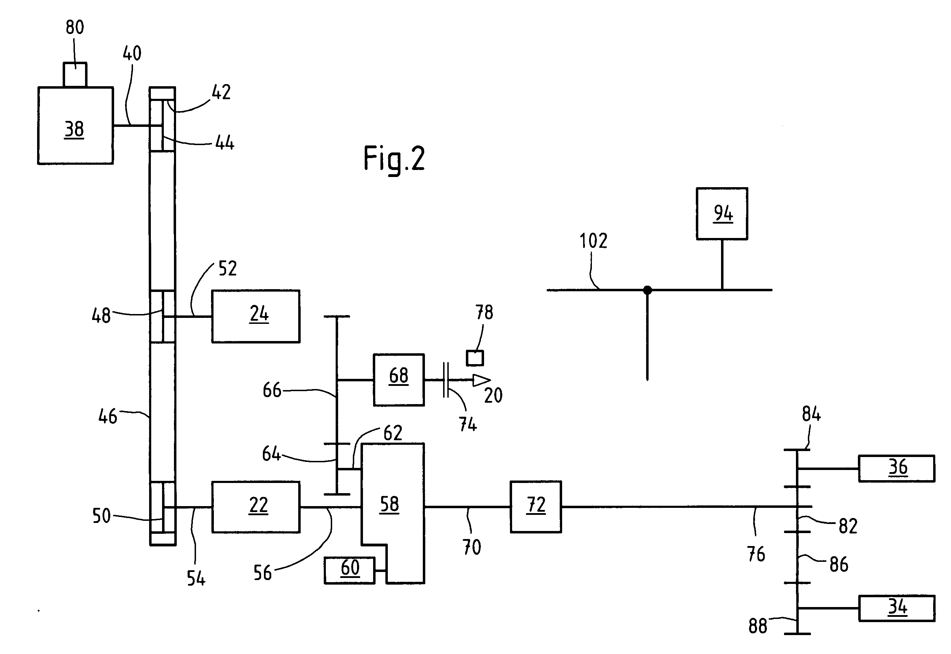

In der Figur 2 sind die Elemente des Antriebssystems des Feldhäckslers 10 im Einzelnen schematisch dargestellt. Ein oberhalb der hinteren Räder 16 an Rahmen 12 befestigter Verbrennungsmotor 38 stellt ein Antriebsdrehmoment bereit. Über eine (nicht eingezeichnete) Hydraulikpumpe sind den Rädern 14, 16 zugeordnete Hydraulikmotoren antreibbar, um den Feldhäcksler 10 in Vorwärtsrichtung über ein Feld oder eine Straße bewegen zu können.

Die Ausgangswelle 40 des Verbrennungsmotors 38 treibt über eine ein- und ausschaltbare Elektrokupplung 44 eine erste Riemenscheibe 42 an. Die Elektrokupplung 44 ist im Innenraum der ersten Riemenscheibe 42 angeordnet. Die erste Riemenscheibe 42 steht mit einem Treibriemen 46 im Eingriff, der weiterhin mit einer zweiten Riemenscheibe 48 und einer dritten Riemenscheibe 50 im Eingriff steht. Dem Treibriemen 46 sind in der Regel Spanneinrichtungen zugeordnet. Anstelle der Elektrokupplung 44 könnte auch eine ein- und ausschaltbare Riemenspanneinrichtung Verwendung finden, um die Antriebsverbindung zwischen dem Treibriemen 46 und dem Verbrennungsmotor 38 herzustellen bzw. zu lösen. Die zweite Riemenscheibe 48 ist über eine Welle 52 mit dem Rotor der Fördervorrichtung 24 gekoppelt. Die dritte Riemenscheibe 50 ist über eine andere Welle 54 mit der Häckseleinrichtung 22 gekoppelt.

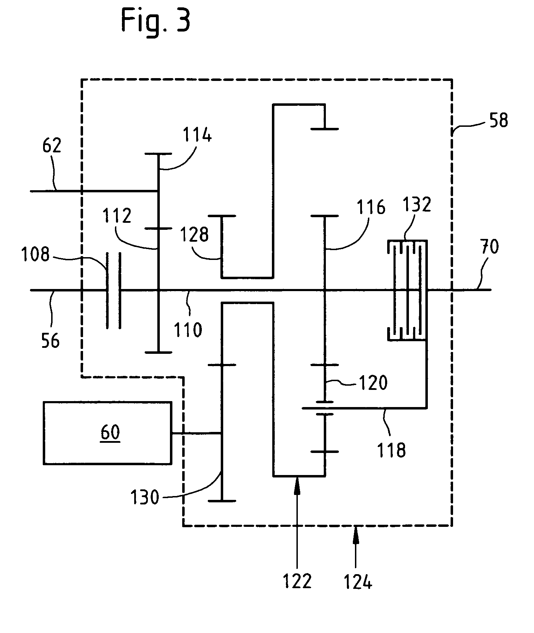

An der der Welle 54 gegenüberliegenden Seite der Häckseleinrichtung 22 ist letztere drehmomentfest mit einer weiteren Welle 56 verbunden, die mit einem verstellbaren Getriebe 58 gekoppelt ist. Das Getriebe 58 wird in der Figur 3 detaillierter dargestellt und wird weiter unten näher beschrieben. Das Getriebe 58 ist weiterhin mit einem Hydromotor 60, einer Abtriebswelle 62, mit der über Zahnräder 64, 66 und ein Schaltgetriebe 68 sowie eine Kupplung 74 die angetriebenen Elemente der Erntegutaufnahmevorrichtung 20 in Verbindung stehen, sowie einer Ausgangswelle 70 verbunden. Die vom Getriebe 58 angetriebene Ausgangswelle 70 steht über ein Übersetzungsgetriebe 72 mit einer Schaltkupplung 74 in Verbindung, die abtriebsseitig mit einer Welle 76 gekoppelt ist, die über Zahnräder 82, 84, 86 und 88 mit den oberen Einzugswalzen 36 und den unteren, sich gegensinnig zu letzteren drehenden Einzugswalzen 34 in Antriebsverbindung steht.

Das zum Antrieb der Erntegutaufnahmevorrichtung 20 dienende Schaltgetriebe 68 kann manuell oder durch einen fremdkraftbetätigten Aktor (nicht gezeigt) in jeweils eine von drei Stellungen geschaltet werden: eine erste Stellung, in der zwischen Ein- und Ausgang des Schaltgetriebes 68 ein erstes Übersetzungsverhältnis wirksam ist, eine zweite Stellung, in der ein zweites Übersetzungsverhältnis wirksam ist, und eine dritte (Leerlauf-) Stellung, in der kein Abtriebsmoment bereitgestellt wird. Das Schaltgetriebe 68 ermöglicht somit, die angetriebenen Elemente der Erntegutaufnahmevorrichtung 20 wahlweise mit einer ersten oder einer zweiten Geschwindigkeit anzutreiben.

Die Kupplung 74 ist mit einem zu ihrem Öffnen und Schließen dienenden fremdkraftbetätigten Aktor 78 ausgestattet, der über einen Daten-Bus 102 mit einer elektronischen Steuerung 94 verbunden ist.

Das verstellbare Getriebe ist in der Figur 3 detaillierter dargestellt. Die mit der Häckseleinrichtung 22 verbundene, weitere Welle 56 ist mit einer abschaltbaren Kupplung 108 verbunden. Ausgangsseitig ist die Kupplung 108 mit einer Welle 110 verbunden, die über ein kämmendes Zahnradpaar 112, 114 die mit der Erntegutaufnahmevorrichtung 20 gekoppelte Abtriebswelle 62 antreibt. Das von der Häckseleinrichtung 22 übertragene Antriebsmoment wird somit mit einer festen Übersetzung durch das Getriebe 58 zum Schaltgetriebe 68 durchgeleitet. In einer anderen Ausführungsform könnte die Welle 62 aber auch mit der Ausgangswelle 70 gekoppelt sein, um eine stufenlose Verstellung der Arbeitsgeschwindigkeit der angetriebenen Elemente der Erntegutaufnahmevorrichtung 20 zu ermöglichen.

Der zur Ausgangswelle 70 führende Teil des verstellbaren Getriebes 58 ist als Planetengetriebe mit einem Sonnenrad 116, einem Planetenradträger 118 mit Planetenrädern 120, einem Ringrad 122 und einem Gehäuse 124 ausgeführt. Das Sonnenrad 116 steht in drehfester Verbindung mit der Welle 110, die auf nicht gezeigte Weise, wie auch das Ringrad 122 und der Planetenradträger 118 in dem Gehäuse 124 drehbar gelagert ist. Die Welle 110 erstreckt sich durch einen zentralen Bereich des glockenförmig gebildeten Ringrads 122. Der als mit veränderbarer Geschwindigkeit angetriebenes Element dienende Hydromotor 60 wird durch eine vom Verbrennungsmotor 38 direkt oder indirekt angetriebene Hydraulikpumpe angetrieben und seine Drehzahl ist durch die Steuerung 94 variierbar. Die Drehzahleinstellung kann durch Fördermengenreduzierung bzw. -erhöhung erfolgen. Es kann anstelle des Hydromotors 60 auch ein Elektromotor verwendet werden.

Der Planetenradträger 118 wird einerseits von den Planetenrädern 120 in Drehung versetzt und ist andererseits mit der Ausgangswelle 70 verbunden. Die Planetenräder 120 rollen zwischen dem Sonnenrad 116 und dem Ringrad 122 auf dem Planetenradträger 118 ab, wobei sich die Drehrichtung und die Geschwindigkeit nach dem Verhältnis der Drehzahlen des Sonnenrads 116 und des Ringrads 122 zueinander richten. Das Ringrad 122 nimmt in seinem Innern die Planetenräder 120, den Planetenradträger 118 und das Sonnenrad 116 auf und ist in seinem geschlossenen Bereich mit einem Zahnrad 128 versehen und mit diesem drehfest verbunden. Dieses Zahnrad 128 kämmt mit einem Zahnrad 130, das von dem Hydromotor 60 angetrieben wird, bzw. sich auf dessen Ausgangswelle befindet. Das verstellbare Getriebe 58 enthält eine weitere Kupplung 132, die sich in drehfester Verbindung mit dem Planetenradträger 118 und somit ausgangsseitig auch in Verbindung mit der Ausgangswelle 70 befindet. Diese Kupplung 132 kann andererseits eine Verbindung mit der Welle 110 und dem Sonnenrad 116 herstellen. Auf diese Weise kann das gesamte Getriebe 58 in sich blockiert werden. Die weitere Kupplung 132 ist elektromagnetisch durch die Steuerung 94 betätigbar.

In einer anderen Ausführungsform ist das verstellbare Getriebe 58 auch als Planetengetriebe ausgeführt, jedoch steht die Welle 110 mit dem Ringrad 122 in Verbindung und das Zahnrad 130 des Hydromotors 60 treibt das Sonnenrad 116 an. In anderen Betriebsarten (z. B. Reversieren und Messerschleifen), in denen allein der Hydromotor 60 die Antriebsleistung für die Gutfördereinrichtung bereitstellt, wird das Ringrad 122 festgehalten. Der Vorteil liegt darin, dass dadurch die Übersetzung des Planetengetriebes genutzt wird. Die Antriebsleistung vom Hydromotor 60 kann dann ggf. über andere Antriebselemente auf die Häckseleinrichtung 22 übertragen werden.

Das beschriebene und zeichnerisch dargestellte Antriebssystem ermöglicht einen Betrieb in verschiedenen Betriebsarten, die mittels einer in der Kabine 18 im Bereich des Fahrers angeordneten, an einem Fahrhebel angebrachten, mit der Steuerung 94 verbundenen Bedienereingabeeinrichtung 134 auswählbar sind. Im Konkreten handelt es sich dabei insbesondere um eine erste Betriebsart, in der ein Erntebetrieb erfolgt, eine zweite Betriebsart, in der die Messer der Häckseleinrichtung 22 geschliffen werden, und eine dritte Betriebsart, in der ein Reversierbetrieb erfolgt. Die zweite und dritte Betriebsart werden in der DE 102 07 467 A näher beschrieben, so dass hier auf eine nähere Erläuterung verzichtet wird. Weitere Betriebsarten, wie Straßenfahrt und Leerlauf, sind selbstverständlich möglich.

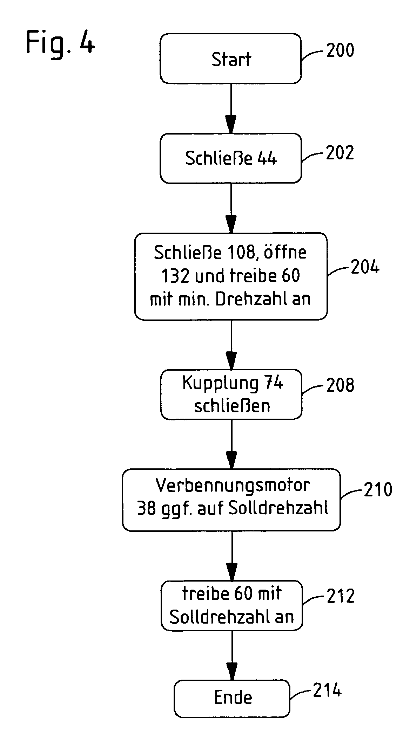

Die Bedienereingabeeinrichtung 134 ermöglicht, wie bereits erwähnt, die Aufnahme der ersten Betriebsart für den Erntebetrieb. Betätigt der Bediener eine zugeordnete Taste der Bedienereingabeeinrichtung 134, durchläuft die Steuerung eine Routine, wie sie in der Figur 4 dargestellt ist. Nach dem Start im Schritt 200 wird im Schritt 202 die Elektrokupplung 44 geschlossen. Die Kupplungen 108 und 74 sind zunächst geöffnet. Der Verbrennungsmotor 38 versetzt nun über den Treibriemen 46 die Fördervorrichtung 24 und die Häckseleinrichtung 22 in Drehung. Die Häckseleinrichtung 22 treibt über die weitere Welle 56 und die Kupplung 108 die Welle 110 an, welche über das kämmende Zahnradpaar 112, 114, die Zahnräder 64, 66 und das Schaltgetriebe 68 die Eingangsseite der Kupplung 74 antreibt.

Anschließend wird im Schritt 204 die Kupplung 108 geschlossen, die Kupplung 132 geöffnet und der Hydromotor 60 mit einer Drehzahl in einer Drehrichtung angetrieben, in der die Welle 70 eine Drehzahl erreicht, in der sie die Einzugswalzen 34, 36 der Zuführeinrichtung 32 mit einer relativ geringen Geschwindigkeit antreibt, so dass diese ggf. in der Zuführeinrichtung 32 befindliches Erntegut möglich langsam zur Häckseleinrichtung 22 fördert. Die Welle 110 treibt jetzt das Sonnenrad 116 an. Der Hydromotor 60 treibt über die kämmenden Zahnräder 128, 130 das Ringrad 122 an. Das Planetengetriebe stellt an der Ausgangswelle 70 eine variierbare Drehzahl bereit und treibt über das Übersetzungsgetriebe 72 und die Zahnräder 82 - 88 die Einzugswalzen 34, 36 an.

Zu diesem Zeitpunkt kann sich der Verbrennungsmotor 38 mit seiner Leerlauf- oder Standgasdrehzahl oder seiner Solldrehzahl, wie sie beim Erntebetrieb verwendet wird, drehen. Die Drehzahl hängt von der jeweiligen Bedienereingabe ab. Da die Drehzahl der Häckseleinrichtung 22 auch von der Drehzahl des Verbrennungsmotors 38 abhängt, berücksichtigt die Steuerung 94 die Drehzahl des Verbrennungsmotors 38 bei der Ansteuerung des Hydromotors 60, so dass unabhängig von der Drehzahl des Verbrennungsmotors 38 eine in etwa konstante, relativ kurze theoretische Schnittlänge erzielt wird.

Dreht sich nun der Verbrennungsmotor 38 mit seiner Leerlauf- oder Standgasdrehzahl, dreht die Kupplung 74 sich eingangsseitig mit einer gegenüber einem mit seiner Solldrehzahl, wie sie beim Erntebetrieb verwendet wird, laufendem Verbrennungsmotor reduzierten Geschwindigkeit und wird im folgenden Schritt 208, in dem sie geschlossen wird, nur wenig belastet, was ihrer Lebensdauer förderlich ist. Außerdem wird, falls die Erntegutaufnahmevorrichtung 20 schon Erntegut enthält, nur relativ langsam weiteres Erntegut in die Zuführeinrichtung 32 gefördert. Es wäre denkbar, die Drehzahl des Verbrennungsmotors 38 selbsttätig auf die Leerlauf- oder Standgasdrehzahl zu verbringen, insbesondere vor dem Schritt 202; wegen des zur Wiederbeschleunigung erforderlichen Energiebedarfs wird aber vorzugsweise darauf verzichtet.

Es folgt der Schritt 210, in dem die Steuerung 94 die Motorsteuerung 80 des Verbrennungsmotors 38 veranlasst, die Drehzahl des Verbrennungsmotors 38 auf seine mit der Bedienereingabeeinrichtung 134 eingebbare Solldrehzahl zu verbringen, falls diese noch nicht vorliegt. Die Geschwindigkeit der Erntegutaufnahmevorrichtung 20 kann manuell oder ggf. durch eine Eingabe in die Eingabeeinrichtung 134 mittels der Steuerung 94 und einen Aktor zur fremdkraftbetätigten Verstellung des Schaltgetriebes 68 in zwei oder mehr Stufen gewählt werden. In einer bevorzugten Ausführungsform wird das Schaltgetriebe 68 durch die Steuerung 94 vor dem Einschalten der Kupplung 74 in die niedrigere Übersetzungsstufe geschaltet und anschließend in die höhere Übersetzungsstufe umgeschaltet, wenn der Bediener nicht die niedrigere Übersetzungsstufe ausgewählt hat.

Im nächsten Schritt 212 wird der Hydromotor 60 durch die Steuerung 94 veranlasst, sich mit seiner Sollgeschwindigkeit zu bewegen. Die Sollgeschwindigkeit des Hydromotors 60 führt zu einer Schnittlänge des von der Häckseleinrichtung 22 zerkleinerten Ernteguts, die einem durch einen Bediener mit der Bedienereingabeeinrichtung 134 eingebbaren (oder auf einen anhand des Signals eines Feuchtigkeitssensors 90 bestimmten) Wert entspricht. Die Steuerung 94 berücksichtigt dabei jeweils die aktuelle Drehzahl der Häckseleinrichtung 22. Die Reihenfolge der Schritte 210 und 212 könnte auch vertauscht werden.

Mit dem Schritt 214 endet die Routine.

## Patentansprüche

1. Verfahren zum Betrieb eines Feldhäckslers (10), der mit einem Verbrennungsmotor (38), der mit einer Erntegutaufnahmevorrichtung (20), einer Häckseleinrichtung (22) und einer zum Transport von Erntegut von der Erntegutaufnahmevorrichtung (20) zur Häckseleinrichtung (22) eingerichteten Zuführeinrichtung (32) in Antriebsverbindung steht, und mit einer zur Vorgabe der Antriebsgeschwindigkeit der Zuführeinrichtung (32) eingerichteten Steuerung (94) ausgestattet ist, die zusätzlich mit einer zum Ein- und Ausschalten des Antriebs der Erntegutaufnahmeeinrichtung eingerichteten Kupplung (74) und mit einer Bedienereingabeeinrichtung (134) verbunden ist, die eine Eingabe zur Aufnahme des Häckselbetriebs ermöglicht, **dadurch gekennzeichnet, dass** die Steuerung (94) auf eine Bedienereingabe in die Bedienereingabeeinrichtung (134) zur Aufnahme des Häckselbetriebs hin selbsttätig folgende Schritte veranlasst:
die Antriebsgeschwindigkeit der Zuführeinrichtung (32) wird auf eine unterhalb eines Sollwerts für den Erntebetrieb liegende Geschwindigkeit gebracht, anschließend wird die Kupplung (74) geschlossen, und schließlich wird nach dem Ablauf einer vorbestimmten Zeit die Antriebsgeschwindigkeit der Zuführeinrichtung (32) auf den Sollwert gebracht.

2. Verfahren zum Betrieb eines Feldhäckslers (10) nach Anspruch 1, **dadurch gekennzeichnet, dass** der Sollwert der Antriebsgeschwindigkeit der Zuführeinrichtung (32) einer Bedienereingabe oder einem selbsttätig bestimmten Wert entspricht.

3. Verfahren zum Betrieb eines Feldhäckslers (10) nach Anspruch 1 oder 2, **dadurch gekennzeichnet, dass** die vor dem Schließen der Kupplung (74) angesteuerte Geschwindigkeit der Zuführeinrichtung (32) einem Minimalwert entspricht.

4. Verfahren zum Betrieb eines Feldhäckslers (10) nach einem der Ansprüche 1 bis 3, **dadurch gekennzeichnet, dass** die Steuerung (94) bei einer Bedienereingabe in die Bedienereingabeeinrichtung (134) zur Aufnahme des Häckselbetriebs selbsttätig zusätzlich folgende Schritte veranlasst:
die Antriebsgeschwindigkeit am Eingang der Kupplung (74) der Erntegutaufnahmeeinrichtung (20) wird vor dem Schließen der Kupplung (74) auf eine unterhalb eines Sollwerts liegende Geschwindigkeit gebracht, und
nach dem Schließen der Kupplung (74) und vorzugsweise vor dem Anheben der Antriebsgeschwindigkeit der Zuführeinrichtung (32) auf den Sollwert wird die Antriebsgeschwindigkeit am Eingang der Kupplung (74) der Erntegutaufnahmeeinrichtung (20) auf eine dem Sollwert entsprechende Geschwindigkeit gebracht.

5. Verfahren zum Betrieb eines Feldhäckslers (10) nach Anspruch 4, **dadurch gekennzeichnet, dass** die vor dem Einschalten der Kupplung (74) angesteuerte Geschwindigkeit am Eingang der Kupplung (74) zumindest etwa einem Minimalwert entspricht.

6. Verfahren zum Betrieb eines Feldhäckslers (10) nach einem der Ansprüche 1 bis 4, **dadurch gekennzeichnet, dass** der Eingang der Kupplung (74) der Erntegutaufnahmeeinrichtung (20) durch ein mechanisches Getriebe (68) mit festem oder änderbarem Übersetzungsverhältnis mit dem Verbrennungsmotor (38) verbunden ist.

7. Verfahren zum Betrieb eines Feldhäckslers (10) nach einem der Ansprüche 1 bis 6, **dadurch gekennzeichnet, dass** die Steuerung (94) die Drehzahl des Verbrennungsmotors (38) vorgibt und die Drehzahl des Verbrennungsmotors (38) nach dem Einschalten der Kupplung (74) anhebt und vorzugsweise zumindest näherungsweise auf seine Solldrehzahl bringt.

8. Verfahren zum Betrieb eines Feldhäckslers (10) nach einem der Ansprüche 1 bis 7, **dadurch gekennzeichnet, dass** die Zuführeinrichtung (32) über ein Planetengetriebe (122) mit dem Verbrennungsmotor (38) in Antriebsverbindung steht, das zur Verstellung der Antriebsgeschwindigkeit der Zuführeinrichtung (32) ein mit veränderbarer Geschwindigkeit angetriebenes Element umfasst.

9. Verfahren zum Betrieb eines Feldhäckslers (10) nach einem der Ansprüche 1 bis 8, **dadurch gekennzeichnet, dass** die Steuerung (94) die Drehzahl eines mit veränderbarer Geschwindigkeit angetriebenen Elements zum Antrieb der Zuführeinrichtung (32) vorgibt und das mit veränderbarer Geschwindigkeit angetriebene Element vor dem Einschalten der Kupplung (74) verlangsamt und insbesondere zumindest näherungsweise auf Minimaldrehzahl bringt.

10. Feldhäcksler (10), mit einem Verbrennungsmotor (38), der mit einer Erntegutaufnahmevorrichtung (20), einer Häckseleinrichtung (22) und einer zum Transport von Erntegut von der Erntegutaufnahmevorrichtung (20) zur Häckseleinrichtung (22) eingerichteten Zuführeinrichtung (32) in Antriebsverbindung steht, und mit einer zur Vorgabe der Antriebsgeschwindigkeit der Zuführeinrichtung (32) eingerichteten Steuerung (94), die zusätzlich mit einer zum Ein- und Ausschalten des Antriebs der Erntegutaufnahmeeinrichtung (20) eingerichteten Kupplung (74) und mit einer Bedienereingabeeinrichtung (134) verbunden ist, die eine Eingabe zur Aufnahme des Häckselbetriebs ermöglicht, **dadurch gekennzeichnet, dass** die Steuerung (94) zur Durchführung eines Verfahrens nach einem der Ansprüche 1 bis 9 eingerichtet ist.

## Claims

1. Method for operating a forage harvester (10), which is fitted with an internal combustion engine (38), which is in drive connection with a crop pick-up device (20), a chopping device (22) and a feeding device (32) that is configured for transferring crop material from the crop pick-up device (20) to the chopping device (22), and with a controller (94), which is configured for setting the drive speed of the feeding device (32) and which, in addition, is connected to a clutch (74) configured for engaging and disengaging the drive of the crop pick-up device and to an operator input device (134) which allows an input to start chopping operation, **characterized in that**, in response to an operator input to the operator input device (134) to start chopping operation, the controller (94) automatically triggers the following steps: the drive speed of the feeding device (32) is adjusted to a speed below a desired value for harvesting operation; the clutch (74) is then closed; and finally, after a preset time has elapsed, the drive speed of the feeding device (32) is adjusted to the desired value.

2. Method for operating a forage harvester (10) according to Claim 1, **characterized in that** the desired value of the drive speed of the feeding device (32) corresponds to an operator input or to an automatically determined value.

3. Method for operating a forage harvester (10) according to Claim 1 or 2, **characterized in that** the selected speed of the feeding device (32) before the clutch (74) is closed corresponds to a minimum value.

4. Method for operating a forage harvester (10) according to one of Claims 1 to 3, **characterized in that**, when there is an operator input to the operator input device (134) to start chopping operation, the controller (94) automatically triggers the following steps in addition: the drive speed at the input of the clutch (74) of the crop pick-up device (20) is adjusted to a speed below a desired value before the clutch (74) is closed, and, after the clutch (74) is closed and preferably before the drive speed of the feeding device (32) is raised to the desired value, the drive speed at the input of the clutch (74) of the crop pick-up device (20) is adjusted to a speed corresponding to the desired value.

5. Method for operating a forage harvester (10) according to Claim 4, **characterized in that** the selected speed at the input of the clutch (74) before the clutch (74) is engaged corresponds at least approximately to a minimum value.

6. Method for operating a forage harvester (10) according to one of Claims 1 to 4, **characterized in that** the input of the clutch (74) of the crop pick-up device (20) is connected to the internal combustion engine (38) by a mechanical transmission (68) with a fixed or variable transmission ratio.

7. Method for operating a forage harvester (10) according to one of Claims 1 to 6, **characterized in that** the controller (94) sets the rotational speed of the internal combustion engine (38) and raises the rotational speed of the internal combustion engine (38) after the clutch (74) is engaged and preferably adjusts it at least approximately to its desired rotational speed.

8. Method for operating a forage harvester (10) according to one of Claims 1 to 7, **characterized in that** the feeding device (32) is in drive connection with the internal combustion engine (38) via a planetary transmission (122), which comprises an element driven with a variable speed for the purpose of adjusting the drive speed of the feeding device (32).

9. Method for operating a forage harvester (10) according to one of Claims 1 to 8, **characterized in that** the controller (94) sets the rotational speed of an element driven with a variable speed for driving the feeding device (32), and slows the element driven with a variable speed before the clutch (74) is engaged and, in particular, adjusts it at least approximately to a minimum speed.

10. Forage harvester (10) having an internal combustion engine (38), which is in drive connection with a crop pick-up device (20), a chopping device (22), and a feeding device (32) that is configured for transferring crop material from the crop pick-up device (20) to the chopping device (22), and having a controller (94), which is configured for setting the drive speed of the feeding device (32) and which, in addition, is connected to a clutch (74) configured for engaging and disengaging the drive of the crop pick-up device (20) and to an operator input device (134) which allows an input to start chopping operation, **characterized in that** the controller (94) is configured for carrying out a method according to one of Claims 1 to 9.

## Revendications

1. Procédé pour faire fonctionner une faucheuse-hacheuse (10), qui est munie d'un moteur à combustion interne (38), qui est en liaison d'entraînement avec un dispositif de réception des récoltes (20), un hacheur (22) et un dispositif d'amenée (32) prévu pour transporter les récoltes du dispositif de réception des récoltes (20) au hacheur (22), et d'une commande (94) prévue pour prédéfinir la vitesse d'entraînement du dispositif d'amenée (32), qui est connectée en outre à un embrayage (74) prévu pour connecter et déconnecter l'entraînement du dispositif de réception des récoltes et à un dispositif d'entrée de l'opérateur (134), qui permet d'effectuer une entrée pour enregistrer le fonctionnement du hacheur, **caractérisé en ce que** la commande (94), sur l'entrée d'un opérateur dans le dispositif d'entrée d'opérateur (134) pour enregistrer le fonctionnement du hacheur, permet automatiquement les étapes suivantes :
la vitesse d'entraînement du dispositif d'amenée (32) est amenée à une vitesse située en dessous d'une valeur de consigne pour le mode de récolte, puis l'embrayage (74) est fermé, et finalement après l'écoulement d'un temps prédéterminé, la vitesse d'entraînement du dispositif d'amenée (32) est amenée à la valeur de consigne.

2. Procédé pour faire fonctionner une faucheuse-hacheuse (10) selon la revendication 1, **caractérisé en ce que** la valeur de consigne de la vitesse d'entraînement du dispositif d'amenée (32) correspond à une entrée de l'opérateur ou à une valeur déterminée automatiquement.

3. Procédé pour faire fonctionner une faucheuse-hacheuse (10) selon la revendication 1 ou 2, **caractérisé en ce que** la vitesse du dispositif d'amenée (32) commandée avant la fermeture de l'embrayage (74) correspond à une valeur minimale.

4. Procédé pour faire fonctionner une faucheuse-hacheuse (10) selon l'une quelconque des revendications 1 à 3, **caractérisé en ce que** la commande (94), dans le cas d'une entrée de l'opérateur dans le dispositif d'entrée d'opérateur (134) pour enregistrer le fonctionnement du hacheur, permet automatiquement en outre les étapes suivantes :
la vitesse d'entraînement à l'entrée de l'embrayage (74) du dispositif de réception des récoltes (20) est amenée à une vitesse située en dessous d'une valeur de consigne avant la fermeture de l'embrayage (74), et après la fermeture de l'embrayage (74), et de préférence avant l'augmentation de la vitesse d'entraînement du dispositif d'amenée (32) à la vitesse de consigne, la vitesse d'entraînement à l'entrée de l'embrayage (74) du dispositif de réception des récoltes (20) est amenée à une vitesse correspondant à la valeur de consigne.

5. Procédé pour faire fonctionner une faucheuse-hacheuse (10) selon la revendication 4, **caractérisé en ce que** la vitesse commandée avant la connexion de l'embrayage (74) à l'entrée de l'embrayage (74) correspond au moins approximativement à une valeur minimale.

6. Procédé pour faire fonctionner une faucheuse-hacheuse (10) selon l'une quelconque des revendications 1 à 4, **caractérisé en ce que** l'entrée de l'embrayage (74) du dispositif de réception des récoltes (20) est connectée par une transmission mécanique (68) avec un rapport de multiplication fixe ou variable au moteur à combustion interne (38).

7. Procédé pour faire fonctionner une faucheuse-hacheuse (10) selon l'une quelconque des revendications 1 à 6, **caractérisé en ce que** la commande (94) prédéfinit le régime du moteur à combustion interne (38) et augmente le régime du moteur à combustion interne (38) après la connexion de l'embrayage (74) et l'amène de préférence au moins approximativement à sa valeur de régime de consigne.

8. Procédé pour faire fonctionner une faucheuse-hacheuse (10) selon l'une quelconque des revendications 1 à 7, **caractérisé en ce que** le dispositif d'amenée (32) est en liaison d'entraînement par le biais d'un engrenage planétaire (122) avec le moteur à combustion interne (38), qui comprend, pour le réglage de la vitesse d'entraînement du dispositif d'amenée (32), un élément entraîné avec une vitesse variable.

9. Procédé pour faire fonctionner une faucheuse-hacheuse (10) selon l'une quelconque des revendications 1 à 8, **caractérisé en ce que** la commande (94) prédéfinit le régime d'un élément entraîné avec une vitesse variable pour l'entraînement du dispositif d'amenée (32), et amène l'élément entraîné avec une vitesse variable avant la connexion de l'embrayage (74) lentement et notamment au moins approximativement au régime minimal.

10. Faucheuse-hacheuse (10), comprenant un moteur à combustion interne (38) qui est en liaison d'entraînement avec un dispositif de réception des récoltes (20), un hacheur (22) et un dispositif d'amenée (32) prévu pour transporter les récoltes du dispositif de réception des récoltes (20) au hacheur (22), et une commande (94) prévue pour prédéfinir la vitesse d'entraînement du dispositif d'amenée (32), qui est en outre connectée à un embrayage (74) prévu pour connecter et déconnecter l'entraînement du dispositif de réception des récoltes (20) et à un dispositif d'entrée d'opérateur (134), qui permet une entrée pour enregistrer le fonctionnement du hacheur, **caractérisée en ce que** la commande (94) est prévue pour mettre en oeuvre un procédé selon l'une quelconque des revendications 1 à 9.
